(19) Europäisches Patentamt
European Patent Office
Office européen des brevets

(11) EP 3 521 341 A1

(12) # EUROPEAN PATENT APPLICATION
published in accordance with Art. 153(4) EPC

(43) Date of publication:
**07.08.2019 Bulletin 2019/32**

(21) Application number: **17856422.5**

(22) Date of filing: **29.09.2017**

(51) Int Cl.:
***C08J 3/24** (2006.01)* ***C08L 9/00** (2006.01)*

(86) International application number:
**PCT/JP2017/035449**

(87) International publication number:
**WO 2018/062473 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2016 JP 2016192891**

(71) Applicant: **JSR Corporation**
**Tokyo 105-8640 (JP)**

(72) Inventors:
- **ADACHI, Takumi**
  **Tokyo 105-8640 (JP)**
- **SANO, Takuya**
  **Tokyo 105-8640 (JP)**
- **FUKUMOTO, Takato**
  **Tokyo 105-8640 (JP)**
- **HONDA, Naoya**
  **Tokyo 105-8640 (JP)**
- **KOBAYASHI, Kunpei**
  **Tokyo 105-8640 (JP)**
- **UEDA, Jiro**
  **Tokyo 105-8640 (JP)**

(74) Representative: **TBK**
**Bavariaring 4-6**
**80336 München (DE)**

## (54) METHOD FOR PRODUCING RUBBER COMPOSITION, AND TIRE

(57) Provided is a method that can produce an inexpensive rubber composition capable of providing a rubber elastic body having high strength. A method for producing a rubber composition of the present invention includes steps of: (A) kneading a component containing at least a highly saturated conjugated diene-based polymer and a crosslinking agent component; (B) kneading a component containing at least a conjugated diene-based polymer other than the highly saturated conjugated diene-based polymer; and (C) kneading an intermediate composition (a) obtained in the step (A) and an intermediate composition (b) obtained in the step (B).

EP 3 521 341 A1

**Description**

TECHNICAL FIELD

The present invention relates to a method for producing a rubber composition and a tire. In particular, the present invention relates to a method for producing a rubber composition suitable for use as a material constituting a tread of a tire and a tire produced using the rubber composition.

BACKGROUND ART

For example, a rubber elastic body used in a tread or the like of a tire is required to have excellent strength. As a rubber composition capable of providing such a rubber elastic body, a composition containing a highly hydrogenated conjugated diene-based copolymer having a hydrogenation rate of 60% or higher has been conventionally known (for example, see Patent Literature 1).

Since the highly hydrogenated conjugated diene-based copolymer is expensive, a rubber composition obtained by kneading the highly hydrogenated conjugated diene-based copolymer with an unhydrogenated conjugated diene-based copolymer is usually used.

However, a rubber elastic body obtained from such a rubber composition does not have sufficiently high strength. Therefore, an inexpensive rubber composition capable of providing a rubber elastic body having high strength is desired.

CITATION LIST

PATENT LITERATURE

Patent Literature 1: Pamphlet of International Publication No. WO2014/133097

SUMMARY OF INVENTION

Technical Problem

The present invention has been made in view of the foregoing circumstances and has as its object the provision of a method that can produce an inexpensive rubber composition capable of providing a rubber elastic body having high strength and a tire produced using the rubber composition. Solution to Problem

A method for producing a rubber composition of the present invention comprises:

a step (A) of kneading a component containing at least a highly saturated conjugated diene-based polymer and a crosslinking agent component,
a step (B) of kneading a component containing at least a conjugated diene-based polymer other than the highly saturated conjugated diene-based polymer, and
a step (C) of kneading an intermediate composition (a) obtained in the step (A) and an intermediate composition (b) obtained in the step (B).

In the method for producing a rubber composition of the present invention, the highly saturated conjugated diene-based polymer may preferably be a polymer in which a value calculated by the following Expression (i) is not lower than 0.6, preferably not lower than 0.8, further preferably not lower than 0.9, where p, q, r, and s are composition ratios (by mole) of a structural unit represented by the following Formula (1), a structural unit represented by the following Formula (2), a structural unit represented by the following Formula (3), and a structural unit represented by the following Formula (4), respectively:

$$(p + 0.5r) / (p + q + 0.5r + s) \quad \dots \text{(i)}.$$

[Chemical Formula 1]

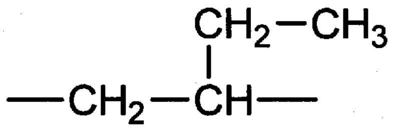
(1)

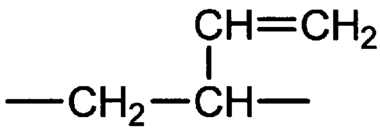
(2)

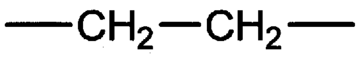
(3)

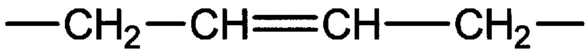
(4)

In the method for producing a rubber composition of the present invention, the iodine value of the highly saturated conjugated diene-based polymer may preferably be 2.8 to 188 and the iodine value of the conjugated diene-based polymer other than the highly saturated conjugated diene-based polymer may preferably be 235 to 470.

A filler may preferably be added in the step (A) and/or the step (B).

A tire of the present invention is produced using the rubber composition obtained by the aforementioned method.

ADVANTAGEOUS EFFECTS OF INVENTION

According to the method for producing a rubber composition of the present invention, a rubber elastic body having high strength can be obtained and an inexpensive rubber composition can be produced.

DESCRIPTION OF EMBODIMENTS

Hereinafter, embodiments of a method for producing a rubber composition of the present invention will be described.

The method for producing a rubber composition of the present invention includes: a step (A) of kneading a component containing at least a highly saturated conjugated diene-based polymer and a crosslinking agent component; a step (B) of kneading a component containing at least a conjugated diene-based polymer (hereinafter referred to as "other conjugated diene-based polymer") other than the highly saturated conjugated diene-based polymer; and a step (C) of kneading an intermediate composition (a) obtained in the step (A) and an intermediate composition (b) obtained in the step (B). In the step (B), a crosslinking agent component may be added.

Highly Saturated Conjugated Diene-Based Polymer:

As the highly saturated conjugated diene-based polymer to be subjected to the step (A), a polymer in which a value calculated by the aforementioned Expression (i) is not lower than 0.6, preferably not lower than 0.8, further preferably not lower than 0.9 may be used where p, q, r, and s are composition ratios (by mole) of a structural unit represented by the aforementioned Formula (1), a structural unit represented by the aforementioned Formula (2), a structural unit represented by the aforementioned Formula (3), and a structural unit represented by the aforementioned Formula (4), respectively.

Further, the iodine value of the highly saturated conjugated diene-based polymer may preferably be within a range of 2.8 to 188.

As such a highly saturated conjugated diene-based polymer, for example, a hydrogenated conjugated diene-based polymer may be used. The hydrogenated conjugated diene-based polymer may be produced by producing an unhydrogenated conjugated diene-based polymer and hydrogenating the obtained unhydrogenated conjugated diene-based polymer.

As the unhydrogenated conjugated diene-based polymer, a copolymer of a conjugated diene compound with an aromatic vinyl compound may be used. The copolymer may preferably have a random copolymerization moiety where the conjugated diene compound and the aromatic vinyl compound are irregularly distributed. The copolymer may further have a block moiety including the conjugated diene compound or the aromatic vinyl compound.

As the conjugated diene compound, 1,3-butadiene, isoprene, 1,3-pentadiene, 2,3-dimethyl-1,3-butadiene, 2-phenyl-1,3-butadiene and 1,3-hexadiene may be used either singly or in any combination thereof. Of these, 1,3-butadiene, isoprene and 2,3-dimethyl-1,3-butadiene may preferably be used.

As the aromatic vinyl compound, styrene, $\alpha$-methylstyrene, 1-vinylnaphthalene, 3-vinyltoluene, ethylvinylbenzene, divinylbenzene, 4-cyclohexylstyrene, 2,4,6-trimethylstyrene, tert-butoxy dimethylsilylstyrene and isopropoxy dimethylsilylstyrene may be used either singly or in any combination thereof. Of these, styrene may preferably be used.

As a polymerization method adopted, a solution polymerization method, a gas phase polymerization method, or a bulk polymerization method may be adopted. The solution polymerization method may particularly preferably be used. As a polymerization procedure, a batch procedure or a continuous procedure may be adopted. When the solution polymerization method is adopted, as a specific example, may be mentioned a method for polymerizing a monomer including the conjugated diene compound in an organic solvent in the presence of a polymerization initiator and if necessary, a randomizer.

In the polymerization reaction, as polymerization initiator, a mixture of at least any one of an alkali metal compound and an alkaline earth metal compound with a compound having a functional group interacting with silica may be used. When the polymerization is performed in the presence of the mixture, a polymerization initiation terminal of the conjugated diene-based polymer can be modified with the functional group interacting with silica. The "functional group interacting with silica" herein means a group having an element such as nitrogen, sulfur, phosphorus, and oxygen that interacts with silica. "Interacting" means that a covalent bond is formed between molecules or an intermolecular force that is weaker than a covalent bond (for example, electromagnetic force working between molecules such as ion-dipole interaction, dipole-dipole interaction, hydrogen bond, and van der Waals force) is formed.

As the organic solvent, a hydrocarbon solvent may be used. As specific examples thereof, may be mentioned propane, n-butane, isobutane, n-pentane, isopentane, n-hexane, cyclohexane, propene, 1-butene, isobutene, trance-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene and cyclohexene. These may be used either singly or in any combination thereof.

As the alkali metal compound and the alkaline earth metal compound that constitute the polymerization initiator, an organic alkali metal compound and an organic alkaline earth metal compound are used. The organic alkali metal compound and the organic alkaline earth metal compound are not particularly limited. As suitable examples of these, may be mentioned an organolithium compound and a lithium amide compound. When the former, or the organolithium compound is used, a conjugated diene-based polymer having a hydrocarbon group on a polymerization initiation terminal and a polymerization active moiety on the other terminal is obtained. When the latter, or the lithium amide compound is used, a conjugated diene-based polymer having a nitrogen-containing group on a polymerization initiation terminal and a polymerization active moiety on the other terminal is obtained.

As the organolithium compound, those having a hydrocarbon group having 1 to 20 carbon atoms are preferable. As examples thereof, may be mentioned methyllithium, ethyllithium, n-propyllithium, iso-propyllithium, n-butyllithium, sec-butyllithium, tert-octyllithium, n-decyllithium, phenyllithium, 2-naphthyllithium, 2-butyl-phenyllithium, 4-phenyl-butyllithium, cyclohexyllithium and reaction products of diisopropenylbenzene and butyllithium. Of these, n-butyllithium and sec-butyllithium may preferably be used.

On the other hand, as examples of the lithium amide compound, may be mentioned lithium hexamethylene imide, lithium pyrrolidide, lithium piperidide, lithium heptamethylene imide, lithium dodecamethylene imide, lithium morpholide, lithium dimethyl amide, lithium diethyl amide, lithium dibutyl amide, lithium dipropyl amide, lithium diisopropyl amide, lithium diheptyl amide, lithium dihexyl amide, lithium dioctyl amide, lithium di-2-ethylhexylamide, lithium didecyl amide, lithium-N-methylpiperazide, lithium ethyl propyl amide, lithium ethyl butyl amide, lithium ethyl benzyl amide and lithium methyl phenethyl amide. Of these, from the viewpoint of the interaction effect on carbon black and silica and the ability to initiate polymerization, cyclic lithium amides such as lithium hexamethylene imide, lithium pyrrolidide, lithium piperidide, lithium heptamethylene imide and lithium dodecamethylene imide may preferably be used. Lithium hexamethylene imide and lithium pyrrolidide and lithium piperidide may particularly preferably be used.

A method for hydrogenating an unhydrogenated conjugated diene-based polymer and conditions for the method are not particularly limited as long as a polymer having a desired hydrogenation ratio is obtained. As examples of a hydrogenation method, may be mentioned a method using a catalyst including as a main component an organometal compound of titanium as a hydrogenation catalyst, a method using a catalyst including an organic compound of iron, nickel, or cobalt and an organometal compound such as alkylaluminum, a method using an organic complex of an organometal compound of ruthenium or rhodium and a method using a catalyst in which a metal such as palladium, platinum, ruthenium, cobalt, and nickel is supported on a carrier such as carbon, silica, and alumina. Among the various methods, a hydrogenation method using an organometal compound of titanium alone or a homogeneous catalyst including the organometal compound of titanium and an organometal compound of lithium, magnesium, or aluminum (Japanese Examined Patent Application Publication Nos. S63-4841 and H1-37970) under a mild condition including low pressure and low temperature is industrially preferable. The selectivity of hydrogenation of a double bond derived from butadiene is high. Therefore, this hydrogenation method is suited for the object of the present invention.

Hydrogenation is performed in a solvent that is inert to a catalyst and capable of dissolving the conjugated diene-based polymer. As the preferable solvent, may be mentioned an aliphatic hydrocarbon such as n-pentane, n-hexane, and n-octane, an alicyclic hydrocarbon such as cyclohexane and cycloheptane, an aromatic hydrocarbon such

as benzene and toluene and an ether such as diethyl ether and tetrahydrofuran. These solvents may be used either singly or in any combination thereof containing them as main components.

A hydrogenation reaction is generally performed by keeping a polymer in a hydrogen or inert atmosphere at a predetermined temperature, adding a hydrogenation catalyst with or without stirring, and then introducing a hydrogen gas to increase the pressure to a predetermined pressure. The inert atmosphere means an atmosphere where a reaction with substances involved in the hydrogenation reaction does not occur. For example, the inert atmosphere includes helium, neon, argon, or the like. In a hydrogenation reaction process for obtaining a hydrogenated conjugated diene-based polymer, a batch processes, a continuous process, or a combination thereof may be adopted. The amount of the hydrogenation catalyst added may preferably be 0.02 to 20 mmol per 100 g of the conjugated diene-based polymer before hydrogenation.

The highly saturated conjugated diene-based polymer used in the step (A) may preferably be a polymer having an iodine value of 2.8 to 188. When the iodine value falls within this range, the strength of cross-linked rubber obtained from the polymer composition is high.

Other Conjugated Diene-Based Polymer:

As the other conjugated diene-based polymer used in the step (B), an unhydrogenated conjugated diene-based polymer or a hydrogenated conjugated diene-based polymer of which the value calculated by the aforementioned Expression (i) is lower than 0.6 may be used. As the other conjugated diene-based polymer, a copolymer of a conjugated diene compound with an aromatic vinyl compound may be used.

The iodine value of the other conjugated diene-based polymer may preferably be 235 to 470. When the iodine value falls within this range, a rubber composition having excellent vulcanization properties is obtained.

Crosslinking Agent Component:

In the present invention, the crosslinking agent component means a component including at least one of a crosslinking agent and a crosslinking accelerator.

In the present invention, as the crosslinking agent, a publicly known crosslinking agent such as sulfur may be used.

The amount of the crosslinking agent to be used may preferably be 0.01 to 20 parts by mass, more preferably 0.1 to 10 parts by mass, per 100 parts by mass of the total conjugated diene-based polymer.

The crosslinking accelerator is not particularly limited, but thiazole type such as N-cyclohexyl-2-benzothiazolyl sulfenamide, dibenzothiazyl disulfide, tetraethyl thiuram disulfide and N,N'-dipentamethylene thiuram tetrasulfide, and vulcanization accelerators such as N, N'-diphenyl guanidine may preferably be used.

The amount of the crosslinking accelerator used may preferably be 0.01 to 20 parts by mass, more preferably 0.1 to 10 parts by mass, per 100 parts by mass of the total conjugated diene-based polymer.

Filler:

In the step (A) and/or the step (B), a filler may preferably be added.

As the filler, silica or carbon black may be used. Silica is not limited as long as it is generally used as a packing agent and has a particulate shape. Silica having a primary particle diameter of not more than 50 nm may preferably be used.

As specific examples of silica, may be mentioned wet silica (hydrated silicic acid), dry silica (anhydrous silicic acid), calcium silicate and aluminum silicate.

As the carbon black, carbon black of various grades such as SRF, GPF, FEF, HAF, ISAF and SAF may be used either singly or in any combination thereof.

In the rubber composition of the present invention, the amount of the filler used may preferably be 10 to 200 parts by mass, more preferably from 30 to 100 parts by mass, per 100 parts by mass of the total conjugated diene-based polymer.

Silane Coupling Agent:

When silica is used as a filler, a silane coupling agent may be contained.

As specific examples of the silane coupling agent, may be mentioned bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane; 3-trimethoxysilylpropyl-N,N-dimethylthiocarbamoyltetrasul fide, 3-triethoxysilylpropyl-N,N-dimethylthiocarbamoyltetrasulf ide, 2-triethoxysilylethyl-N,N-dimethylthiocarbamoyltetrasulfi de, 3-trimethoxysilylpropylbenzothiazolyltetrasulfide, 3-triethoxysilylpropylbenzolyltetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetra sulfide and dimethoxymethylsilylpropylbenzothiazolyltetrasulfide. These silane coupling agents may be used either singly or in any combination thereof. Of these, bis(3-triethoxysilylpropyl) polysulfide and 3-trimethoxysilylpropylbenzothiazyltetrasulfide may preferably be used from the viewpoint of reinforcing improving effect and the like.

The use ratio of the silane coupling agent may preferably be 0.5 to 20 parts by mass per 100 parts by mass of silica.

Other Component:

In the steps (A) and (B), various additives may be added in addition of the aforementioned components. As such an additive, for example, a crosslinking aid or processing aid, an extender oil, an antioxidant, a surface crack inhibitor, an antiscorching agent, zinc oxide, or the like may be used.

Stearic acid is generally used as the crosslinking aid or processing aid, and the use ratio thereof may preferably be 0.5 to 5 parts by mass per 100 parts by mass of the total conjugated diene-based polymer.

Step (A):

In the step (A), the intermediate composition (a) is prepared by heating and kneading the highly saturated conjugated diene-based polymer and the crosslinking agent component, and if necessary, the filler and the other component described above. As a kneader, an open or close kneader such as a plastomill, a Banbury mixer, a roller, and an internal mixer may be used. In the step (A), the kneading temperature is, for example, 10 to 150°C.

In the step (A), kneading in two steps, specifically, kneading components other than the crosslinking agent component and then adding the crosslinking agent component into the components followed by kneading is preferable.

The amount of the crosslinking agent used in the step (A) may preferably be not lower than 1% by mass of the total amount of the crosslinking agent. The amount of the crosslinking accelerator used in the step (A) may preferably be not lower than 1% by mass of the total amount of the crosslinking accelerator. The intermediate composition (a) may preferably contain the crosslinking agent. This is because co-crosslinking between the highly saturated conjugated diene-based polymer having a few crosslinking point and the other conjugated diene-based polymer is likely to occur.

Step (B):

In the step (B), the other conjugated diene-based polymer, and if necessary, the crosslinking agent component, the filler, and the other component are heated and kneaded, to prepare the intermediate composition (b). As a kneader, an open or close kneader such as a plastomill, a Banbury mixer, a roller, and an internal mixer may be used. In the step (B), the kneading temperature is, for example, 10 to 150°C.

When the crosslinking agent component is added in the step (B), kneading in two steps, specifically, kneading components other than the crosslinking agent component and then adding the crosslinking agent component into the components followed by kneading is preferable.

When the crosslinking agent component is added in the step (B), the crosslinking agent component may be the same as or different from the crosslinking agent component used in the step (A). The crosslinking agent component, however, may preferably be a component different from the crosslinking agent component used in the step (A).

Step (C) :

In the step (C), the intermediate composition (a) obtained in the step (A) and the intermediate composition (b) obtained in the step (B) are kneaded to prepare a rubber composition. As a kneader, a plastomill, a Banbury mixer, a rubber roller may preferably be used. In the step (C), the kneading temperature is, for example, 10 to 120°C.

The ratio of the intermediate composition (a) to the intermediate composition (b) used in the step (C) may preferably satisfy that the ratio by mass of the highly saturated conjugated diene-based polymer in the intermediate composition (a) to the other conjugated diene-based polymer in the intermediate composition (b) is 1:99 to 99:1. When the amount of the intermediate composition (a) is too small, a rubber composition having sufficiently high strength cannot be obtained. In contrast, when the amount of the intermediate composition (b) is too small, an inexpensive rubber composition cannot be obtained.

Rubber Elastic Body:

The rubber composition obtained by the production method of the present invention may be subjected to a crosslinking treatment, to obtain a rubber elastic body. Specifically, the rubber composition is molded into a desired shape, and then subjected to a heating treatment. In this manner, a rubber elastic body in a desired shape is obtained. The thus obtained rubber elastic body has high mechanical strength. Therefore, the rubber elastic body is suitable for use in a tread of a tire.

Examples

Hereinafter, specific examples of the present invention will be described. However, the present invention is not limited to these examples.
In Examples and Comparative Examples described below, methods for measuring the weight average molecular weight of a diene-based polymer and the composition ratios of structural units represented by Formulae (1) to (4), the torque of a rubber composition, and the tensile breaking strength and tensile breaking elongation of a rubber elastic body are as follows.

Weight Average Molecular Weight:

The weight average molecular weight in terms of polystyrene was measured using gel permeation chromatography (GPC) ("HLC-8120" manufactured by TOSOH CORPORATION) from a holding time corresponding to the apex of the maximum peak of a GPC curve obtained under the following conditions.

(Conditions for GPC)

Column: trade name "GMHXL" (manufactured by TOSOH CORPORATION) ×2
Column temperature: 40°C
Mobile phase: tetrahydrofuran
Flow rate: 1.0 mL/min
Sample concentration: 10 mg/20 mL

Composition Ratios of Structural Units represented by Formulae (1) to (4) :

The Composition ratios were determined by $^1$H-NMR at 500 MHz.

Torque of Rubber Composition:

The maximum torque and the minimum torque were determined by measuring a change in torque at 160°C for 30 minutes by CURELASTOMETER manufactured by JSR Trading Co., Ltd.

Tensile Breaking Strength and Tensile Breaking Elongation:

The tensile breaking strength and the tensile breaking elongation were measured using a specimen in a No. 3 shape in accordance with JIS K6251 under conditions of a measurement temperature of 23°C and a tensile rate of 500 mm/min.

1. Synthesis of Conjugated Diene Polymer

Synthesis Example 1:

In a 50-L autoclave reactor purged with nitrogen, 25800 g of cyclohexane as a solvent, 201 g of tetrahydrofuran as a vinyl content modifier, and 1462 g of styrene and 2193 g of 1,3-butadiene as polymerization monomers were placed. The temperature of the contents in the reactor was adjusted to 42°C, and a cyclohexane solution containing 2.84 g of n-butyl lithium as a polymerization initiator was added to initiate polymerization. The polymerization was performed under a thermal insulation condition.
When the temperature of the contents in the reactor reached 65°C, 645 g of butadiene as a polymerization monomer was added over 1 minute. For additional 3 minutes, polymerization was performed, and 0.58 g of silicon tetrachloride as a coupling agent was added. After 5 minutes, 0.4 g of [N,N-bis(trimethylsilyl)aminopropyl]methyldiethoxysilane (referred to as "silane compound 1" in the following Table 1) was added as a terminal modifier to perform a reaction for 15 minutes.

Subsequently, the temperature of the reaction liquid was adjusted to not lower than 80°C, and hydrogen was introduced into the system. After that, 2.76 g of [bis (η5-cyclopentadienyl)titanium(furfuryloxy)chloride] (also referred to as "[chlorobis(2,4-cyclopentadienyl)titanium(IV) furfurylalkoxide] "), 2.83 g of diethyl aluminum chloride, and 1.18 g of n-butyl lithium were added. The reaction was performed so that the hydrogen pressure was kept to not higher than 0.7 MPa until the hydrogenation ratio was 95%. After the flow rate in terms of hydrogen reached a predetermined value, the system was returned to normal temperature and normal pressure, and the reaction liquid was taken from the reactor. Thus, a polymer solution was obtained.

Subsequently, the polymer solution was desolvated by steam stripping (steam temperature: 190°C) for 2 hours at a temperature of liquid phase of a desolvation tank of 95°C, and dried by a hot roll adjusted to 110°C. As a result, a hydrogenated conjugated diene-based polymer having a value calculated by Expression (i) of 0.95 was obtained. The weight average molecular weight of the obtained hydrogenated conjugated diene-based polymer was 200000, and the iodine value thereof was 15.5. This hydrogenated conjugated diene-based polymer is referred to as "conjugated diene-based polymer (1-1)."

Synthesis Example 2:

A hydrogenated conjugated diene-based polymer having a value calculated by Expression (i) of 0.95 was obtained in the same manner as that in Synthesis Example 1 except that 0.4 g of 1-[3-(triethoxysilyl)propyl-4-methylpiperadine] (referred to as "silane compound 2" in the following Table 1) was used as a terminal modifier instead of 0.4 g of [N,N-bis(trimethylsilyl)aminopropyl]methyldiethoxysilane. The weight average molecular weight of the obtained hydrogenated conjugated diene-based polymer was 200000, and the iodine value thereof was 15.5. This hydrogenated conjugated diene-based polymer is referred to as "conjugated diene-based polymer (1-2)."

Synthesis Example 3:

A hydrogenated conjugated diene-based polymer having a value calculated by Expression (i) of 0.5 was obtained in the same manner as that in Synthesis Example 1 except that the reaction was performed so that the hydrogen pressure was kept to not lower than 0.7 MPa until the hydrogenation ratio was 50% after the hydrogenation catalyst has added. The weight average molecular weight of the obtained hydrogenated conjugated diene-based polymer was 200000, and the iodine value thereof was 235. This hydrogenated conjugated diene-based polymer is referred to as "conjugated diene-based polymer (2-1)."

Synthesis Example 4:

In a 50-L autoclave reactor purged with nitrogen, 25800 g of cyclohexane, 201 g of tetrahydrofuran, 1462 g of styrene and 2193 g of 1,3-butadiene were placed. The temperature of the contents in the reactor was adjusted to 42°C, and a cyclohexane solution containing 2.84 g of n-butyl lithium was added to initiate polymerization. The polymerization was performed under a thermal insulation condition.

When the temperature of the contents in the reactor reached 65°C, 645 g of butadiene was added over 1 minute. For additional 3 minutes, polymerization was performed, and 0.58 g of silicon tetrachloride was added. After 5 minutes, 0.4 g of [N,N-bis(trimethylsilyl)aminopropyl]methyldiethoxysilane was added to perform a reaction for 15 minutes.

Subsequently, the temperature of the reaction liquid was adjusted to not lower than 80°C, hydrogen was introduced into the system and the hydrogen pressure was kept to not higher than 0.4 MPa to deactivate the active moiety. Then, the system was returned to normal temperature and normal pressure, and the reaction liquid was taken from the reactor. Thus, a polymer solution was obtained.

Subsequently, the polymer solution was desolvated by steam stripping (steam temperature: 190°C) for 2 hours at a temperature of liquid phase of a desolvation tank of 95°C, and dried by a hot roll adjusted to 110°C. As a result, an unhydrogenated conjugated diene-based polymer having a value calculated by Expression (i) of 0 was obtained. The weight average molecular weight of the obtained unhydrogenated conjugated diene-based polymer was 200000, and the iodine value thereof was 470. This unhydrogenated conjugated diene-based polymer is referred to as "conjugated diene-based polymer (2-2)."

[Table 1]

| | | SYNTHESIS EXAMPLE 1 | SYNTHESIS EXAMPLE 2 | SYNTHESIS EXAMPLE 3 | SYNTHESIS EXAMPLE 4 |
|---|---|---|---|---|---|
| KIND OF CONJUGATED DIENE-BASED POLYMER | | (1-1) | (1-2) | (2-1) | (2-2) |
| POLYMERIZATION COMPOSITION | | | | | |
| SOLVENT | | | | | |
| CYCLOHEXANE | (g) | 25,800 | 25,800 | 25,800 | 25,800 |
| VINYL CONTENT MODIFIER | | | | | |
| TETRAHYDROFURAN | (g) | 201 | 201 | 201 | 201 |
| POLYMERIZATION MONOMER | | | | | |
| STYRENE | (g) | 1462 | 1462 | 1462 | 1462 |
| BUTADIENE | (g) | 2,193 | 2,193 | 2,193 | 2,193 |
| ADDITIONAL BUTADIENE | (g) | 645 | 645 | 645 | 645 |
| POLYMERIZATION INITIATOR | | | | | |
| N-BUTYLLITHIUM | (g) | 2.84 | 2.84 | 2.84 | 2.84 |
| PIPERIDINE | (mmol) | - | - | - | - |
| COUPLING AGENT | | | | | |
| SILICON TETRACHLORIDE | (g) | 0.58 | 0.58 | 0.58 | 0.58 |
| TERMINAL MODIFIER | | | | | |
| SILANE COMPOUND 1 | (g) | 0.4 | - | 0.4 | 0.4 |
| SILANE COMPOUND 2 | (g) | - | 0.4 | - | - |
| HYDROGENATION CATALYST | | | | | |
| [BIS (N5-CYCLOPENTADIENYL) TITANIUM <FURFURYLOXY) CHLORIDE 1 | (g) | 2.76 | 2.76 | 2.76 | - |
| DIETHYL ALUMINUM CHLORIDE | (g) | 2.83 | 2.83 | 2.83 | - |
| n-BUTYL LITHIUM (g) | (g) | 1.18 | 1.18 | 1.18 | - |
| PROPERTIES OF POLYMER | | | | | |
| POLYMERIZATION AVERAGE MOLECULAR WEIGHT | ($\times 10^4$) | 20 | 20 | 20 | 20 |
| VALUE CALCULATED BY EXPRESSION (i) | | 0.95 | 0.95 | 0.5 | 0 |
| IODINE VALUE | (g/100g) | 15.5 | 15.5 | 235 | 470 |

2. Preparation of Intermediate Composition (a) (Step (A))

Preparative Example a1:

Using a plastomill equipped with a temperature controller, 120 g of the conjugated diene-based polymer (1-1), 66.0 g of silica particles, 5.3 g of a silane coupling agent (bis(triethoxysilylpropyl)disulfide), 12 g of an extender oil (T-DAE), 2.4 g of stearic acid, 3.6 g of zinc oxide, and 1.2 g of an antioxidant (Nocrac 810-NA manufactured by Ouchi Shinko Chemical Industrial Co., Ltd.) were kneaded at 100°C for 3.5 minutes. Subsequently, the obtained kneaded mixture was cooled to room temperature, and 0.6 g of sulfur, 1.8 g of N-cyclohexyl-2-benzothiazolylsulfenamide (CZ), 0.6 g of dibenzothiazyl disulfide (DM), 0.84 g of tetraethylthiuram disulfide (TET), and 0.84 g of N,N'-dipentamethylenethiuram tetrasulfide (TRA) were added. The mixture was kneaded at 80°C for 1.5 minutes, to prepare an intermediate composition (a). The obtained intermediate composition (a) is referred to as "intermediate composition (a1)."

Preparative Example a2:

An intermediate composition (a) was prepared in the same manner as that in Preparative Example a1 except that the amount of sulfur added was changed in accordance with the following Table 2. The obtained intermediate composition (a) is referred to as "intermediate composition (a2)."

Preparative Example a3:

Using a plastomill equipped with a temperature controller, 120 g of the conjugated diene-based polymer (1-1), 66.0 g of silica particles, 5.3 g of a silane coupling agent (bis(triethoxysilylpropyl)disulfide), 12 g of an extender oil (T-DAE), 2.4 g of stearic acid, 3.6 g of zinc oxide, and 1.2 g of an antioxidant (Nocrac 810-NA manufactured by Ouchi Shinko Chemical Industrial Co., Ltd.) were kneaded at 100°C for 3.5 minutes. Subsequently, the obtained kneaded mixture was cooled to room temperature, and 3.3 g of sulfur, 2.7 g of N,N'-diphenylguanidine (DPG), 5.0 g of N-cyclohexyl-2-benzothiazolylsulfenamide (CZ), 0.6 g of dibenzothiazyl disulfide (DM), 0.84 g of tetraethylthiuram disulfide (TET), and 0.84 g of N,N'-dipentamethylenethiuram tetrasulfide (TRA) were added. The mixture was kneaded at 80°C for 1.5 minutes, to prepare an intermediate composition (a). The obtained intermediate composition (a) is referred to as "intermediate composition (a3)."

Preparative Example a4:

Using a plastomill equipped with a temperature controller, 120 g of the conjugated diene-based polymer (1-1), 66.0 g of silica particles, 5.3 g of a silane coupling agent (bis(triethoxysilylpropyl)disulfide), 12 g of an extender oil (T-DAE), 2.4 g of stearic acid, 3.6 g of zinc oxide, and 1.2 g of an antioxidant (Nocrac 810-NA manufactured by Ouchi Shinko Chemical Industrial Co., Ltd.) were kneaded at 100°C for 3.5 minutes. Subsequently, the obtained kneaded mixture was cooled to room temperature, and 1.8 g of sulfur, 2.2 g of N-cyclohexyl-2-benzothiazolylsulfenamide (CZ), and 1.8 g of N,N'-diphenylguanidine (DPG) were added. The mixture was kneaded at 80°C for 1.5 minutes, to prepare an intermediate composition (a). The obtained intermediate composition (a) is referred to as "intermediate composition (a4)."

Preparative Example a5:

An intermediate composition (a) was prepared in the same manner as that in Preparative Example a4 except that the amount of sulfur added was changed in accordance with the following Table 2. The obtained intermediate composition (a) is referred to as "intermediate composition (a5)."

Preparative Example a6:

An intermediate composition (a) was prepared in the same manner as that in Preparative Example a4 except that the respective amounts of sulfur, N-cyclohexyl-2-benzothiazolylsulfenamide (CZ), and N,N'-diphenylguanidine (DPG) added were changed in accordance with the following Table 2. The obtained intermediate composition (a) is referred to as "intermediate composition (a6)."

Preparative Example a7:

An intermediate composition (a) was prepared in the same manner as that in Preparative Example a4 except that a plastomill equipped with a temperature controller was used, the diene-based polymer (1-2) was used instead of the conjugated diene-based polymer (1-1), and the respective amounts of sulfur, N-cyclohexyl-2-benzothiazolylsulfenamide (CZ), and N,N'-diphenylguanidine (DPG) added were changed in accordance with the following Table 2. The obtained intermediate composition (a) is referred to as "intermediate composition (a7)."

[Table 2]

| | PREPARATION EXAMPLE a1 | PREPARATION EXAMPLE a2 | PREPARATION EXAMPLE a3 | PREPARATION EXAMPLE a4 | PREPARATION EXAMPLE a5 | PREPARATION EXAMPLE a6 | PREPARATION EXAMPLE a7 |
|---|---|---|---|---|---|---|---|
| KIND OF INTERMEDIATE COMPOSITION (a) | (a1) | (a2) | (a3) | (a4) | (a5) | (a6) | (a7) |
| CONJUGATED DIENE-BASED POLYMER (1-1) (g) | 120.0 | 120.0 | 120.0 | 120.0 | 120.0 | 120.0 | |
| CONJUGATED DIENE-BASZD POLYMER (1-2) (g) | | | | | | | 120.0 |
| SILICA PARTICLES (g) | 66.0 | 66.0 | 66.0 | 66.0 | 66.0 | 66.0 | 66.0 |
| SILANE COUPLING AGENT (g) | 5.3 | 5.3 | 5.3 | 5.3 | 5.3 | 5.3 | 5.3 |
| EXTENDER OIL (g) | 12.0 | 12.0 | 12.0 | 12.0 | 12.0 | 12.0 | 12.0 |
| STEARIC ACID (g) | 2.4 | 2.4 | 2.4 | 2.4 | 2.4 | 2.4 | 2.4 |
| ZINC OXIDE (g) | 3.6 | 3.6 | 3.6 | 3.6 | 3.6 | 3.6 | 3.6 |
| ANTIOXIDANT (g) | 1.2 | 1.2 | 1.2 | 1.2 | 1.2 | 1.2 | 1.2 |
| DPG (g) | | | 2.7 | 1.8 | 1.8 | 4.5 | 4.5 |
| CZ (g) | 1.8 | 1.8 | 5.0 | 2.2 | | 5.4 | 5.4 |
| DM (g) | 0.6 | 0.6 | 0.6 | | | | |
| TET (g) | 0.84 | 0.84 | 0.84 | | | | |
| TRA (g) | 0.84 | 0.84 | 0.84 | | | | |
| SULFUR (g) | 0.6 | 3.3 | 3.3 | 1.8 | 4.5 | 4.5 | 4.5 |

3. Preparation of Intermediate Composition (b) (Step (B))

Preparative Example b1:

Using a plastomill equipped with a temperature controller, 120 g of the conjugated diene-based polymer (2-2), 66.0 g of silica particles, 5.3 g of a silane coupling agent (bis(triethoxysilylpropyl)disulfide), 12 g of an extender oil (T-DAE), 2.4 g of stearic acid, 3.6 g of zinc oxide, and 1.2 g of an antioxidant (Nocrac 810-NA manufactured by Ouchi Shinko Chemical Industrial Co., Ltd.) were kneaded at 100°C for 3.5 minutes. Subsequently, the obtained kneaded mixture was cooled to room temperature, and 1.8 g of sulfur, 2.2 g of N-cyclohexyl-2-benzothiazolylsulfenamide (CZ) and 1.8 g of N,N'-diphenylguanidine (DPG) were added. The mixture was kneaded at 80°C for 1.5 minutes, to prepare an intermediate composition (b). The obtained intermediate composition (b) is referred to as "intermediate composition (b1)."

Preparative Example b2:

An intermediate composition (b) was prepared in the same manner as that in Preparative Example b1 except that sulfur was not added. The obtained intermediate composition (b) is referred to as "intermediate composition (b2)."

Preparative Example b3:

Using a plastomill equipped with a temperature controller, 120 g of the conjugated diene-based polymer (2-2), 66.0 g of silica particles, 5.3 g of a silane coupling agent (bis(triethoxysilylpropyl)disulfide), 12 g of an extender oil (T-DAE), 2.4 g of stearic acid, 3.6 g of zinc oxide, and 1.2 g of ab antioxidant (Nocrac 810-NA manufactured by Ouchi Shinko Chemical Industrial Co., Ltd.) were kneaded at 100°C for 3.5 minutes to prepare an intermediate composition (b). The obtained intermediate composition (b) is referred to as "intermediate composition (b3)."

Preparative Example b4:

An intermediate composition (b) was prepared in the same manner as that in Preparative Example b1 except that the conjugated diene-based polymer (2-1) was used instead of the conjugated diene-based polymer (2-2), and the respective amounts of sulfur, N-cyclohexyl-2-benzothiazolylsulfenamide (CZ) and N,N'-diphenylguanidine (DPG) added were changed in accordance with the following Table 3. The obtained intermediate composition (b) is referred to as "intermediate composition (b4)."

[Table 3]

| | | PREPARATION EXAMPLE a1 | PREPARATION EXAMPLE a2 | PREPARATION EXAMPLE a3 | PREPARATION EXAMPLE a4 |
|---|---|---|---|---|---|
| KIND OF INTERMEDIATE COMPOSITION (b) | | (b1) | (b2) | (b3) | (b4) |
| CONJUGATED DIENE-BASED POLYMER (2-1) | (g) | | | | 120.0 |
| CONJUGATED DIENE-BASED POLYMR (2-2) | (g) | 120.0 | 120.0 | 120.0 | |
| SILICA PARTICLES | (g) | 66.0 | 66.0 | 66.0 | 66.0 |
| SILANE COUPLING AGENT | (g) | 5.3 | 5.3 | 5.3 | 5.3 |
| EXTENDER OIL | (g) | 12.0 | 12.0 | 12.0 | 12.0 |
| STEARIC ACID | (g) | 2.4 | 2.4 | 2.4 | 2.4 |
| ZINC OXIDE | (g) | 3.6 | 3.6 | 3.6 | 3.6 |
| ANTIOXIDANT | (g) | 1.2 | 1.2 | 1.2 | 1.2 |
| DPG | (g) | 1.8 | 1.8 | | 4.5 |

(continued)

| | | PREPARATION EXAMPLE a1 | PREPARATION EXAMPLE a2 | PREPARATION EXAMPLE a3 | PREPARATION EXAMPLE a4 |
|---|---|---|---|---|---|
| KIND OF INTERMEDIATE COMPOSITION (b) | | (b1) | (b2) | (b3) | (b4) |
| CZ | (g) | 2.2 | 2.2 | | 5.4 |
| SULFUR (g) | (g) | 1.8 | | | 4.5 |

4. Production of Rubber Composition (Step (C)) and Production of Rubber Elastic Body

Production Example 1:

Using a plastomill equipped with a temperature controller, 71.7 g of the intermediate composition (a1) and 108.1 g of the intermediate composition (b1) were kneaded at 80°C for 1.5 minutes, to produce a rubber composition. The ratio of each component in the obtained rubber composition, and the maximum torque MH and minimum torque ML of the rubber composition are shown in the following Table 4.

The obtained rubber composition was molded, and vulcanized under a condition of 160°C using a vulcanizing pressing machine, to obtain a rubber elastic body including a crosslinked polymer. The tensile strength and tensile elongation of the obtained rubber elastic body are shown in the following Table 4.

Production Example 2:

A rubber composition was produced in the same manner as that in Production Example 1 except that 72.6 g of the intermediate composition (a2) and 107.2 g of the intermediate composition (b2) were used instead of 71.7 g of the intermediate composition (a1) and 108.1 g of the intermediate composition (b1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 3:

A rubber composition was produced in the same manner as that in Production Example 1 except that 75.1 g of the intermediate composition (a3) and 105.2 g of the intermediate composition (b3) were used instead of 71.7 g of the intermediate composition (a1) and 108.1 g of the intermediate composition (b1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 4:

A rubber composition was produced in the same manner as that in Production Example 1 except that 72.0 g of the intermediate composition (a4) was used instead of 71.7 g of the intermediate composition (a1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 5:

A rubber composition was produced in the same manner as that in Production Example 1 except that 73.0 g of the intermediate composition (a5) and 107.2 g of the intermediate composition (b2) were used instead of 71.7 g of the intermediate composition (a1) and 108.1 g of the intermediate composition (b1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 6:

A rubber composition was produced in the same manner as that in Production Example 1 except that 74.9 g of the intermediate composition (a6) and 105.2 g of the intermediate composition (b3) were used instead of 71.7 g of the intermediate composition (a1) and 108.1 g of the intermediate composition (b1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 7:

A rubber composition was produced in the same manner as that in Production Example 1 except that the amount of the intermediate composition (a1) was changed from 71.7 g to 36.1 g and the amount of the intermediate composition (b1) was changed from 108.1 g to 143.9 g, so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 8:

A rubber composition was produced in the same manner as that in Production Example 1 except that the amount of the intermediate composition (a1) was changed from 71.7 g to 108.2 g and the amount of the intermediate composition (b1) was changed from 108.1 g to 71.8 g, so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 9:

A rubber composition was produced in the same manner as that in Production Example 1 except that the amount of the intermediate composition (a1) was changed from 71.7 g to 144.1 g and the amount of the intermediate composition (b1) was changed from 108.1 g to 35.9 g, so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 10:

A rubber composition was produced in the same manner as that in Production Example 1 except that 71.7 g of the intermediate composition (a7) was used instead of 71.7 g of the intermediate composition (a1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

Production Example 11:

A rubber composition was produced in the same manner as that in Production Example 1 except that 108.1 g of the intermediate composition (b4) was used instead of 108.1 g of the intermediate composition (b1), so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 4.

[Table 4]

| | | PRODUCTION EXAMPLE 1 | PRODUCTION EXAMPLE 2 | PRODUCTION EXAMPLE 3 | PRODUCTION EXAMPLE 4 | PRODUCTION EXAMPLE 5 | PRODUCTION EXAMPLE 6 | PRODUCTION EXAMPLE 7 | PRODUCTION EXAMPLE 8 | PRODUCTION EXAMPLE 9 | PRODUCTION EXAMPLE 10 | PRODUCTION EXAMPLE 11 |
|---|---|---|---|---|---|---|---|---|---|---|---|---|
| INTERMEDIATE COMPOSITION (a) | | a1 | a2 | a3 | a4 | a5 | a6 | a1 | a1 | a1 | a7 | a1 |
| USE AMOUNT OF INTERMEDIATE COMPOSITION (a) | | 71.7 | 72.6 | 75.1 | 72.0 | 73.0 | 74.9 | 36.1 | 108.2 | 144.1 | 71.7 | 71.7 |
| INTERMEDIATE COMPOSITION (b) | | b1 | b2 | b3 | b1 | b2 | b3 | b1 | b1 | b1 | b1 | b4 |
| USE AMOUNT OF INTERMEDIATE COMPOSITION (b) | | 108.1 | 107.2 | 105.2 | 108.1 | 107.2 | 105.2 | 143.9 | 71.8 | 35.9 | 108.1 | 108.1 |
| CONJUGATED DIENE-BASED POLYMER(1-1) | (parts by mass) | 40.0 | 40.0 | 40.3 | 40.0 | 40.0 | 40.0 | 20.1 | 60.3 | 80.4 | | 40.0 |
| CONJUGATED DIENE-BASED POLYMER(1-2) | (parts by mass) | | | | | | | | | | 38.3 | |
| CONJUGATED DIENE-BASED POLYMER(2-1) | (parts by mass) | | | | | | | | | | | 57.7 |

(continued)

| | | PRODUCTION EXAMPLE 1 | PRODUCTION EXAMPLE 2 | PRODUCTION EXAMPLE 3 | PRODUCTION EXAMPLE 4 | PRODUCTION EXAMPLE 5 | PRODUCTION EXAMPLE 6 | PRODUCTION EXAMPLE 7 | PRODUCTION EXAMPLE 8 | PRODUCTION EXAMPLE 9 | PRODUCTION EXAMPLE 10 | PRODUCTION EXAMPLE 11 |
|---|---|---|---|---|---|---|---|---|---|---|---|---|
| CONJUGATED DIENE-BASED POLYMER(2-2) | (parts by mass) | 60.0 | 60.0 | 60.0 | 60.0 | 60.0 | 60.0 | 79.9 | 39.8 | 19.9 | 60.0 | |
| SILICA PARTICLES | (parts by mass) | 55.0 | 55.0 | 55.1 | 55.0 | 55.0 | 55.0 | 55.0 | 55.1 | 55.2 | 54.0 | 53.7 |
| SILANE COUPLING AGENT | (parts by mass) | 4.4 | 4.4 | 4.4 | 4.4 | 4.4 | 4.4 | 4.4 | 4.4 | 4.4 | 4.3 | 4.3 |
| EXTENDER OIL | (parts by mass) | 10.0 | 10.0 | 10.0 | 10.0 | 10.0 | 10.0 | 10.0 | 10.1 | 10.0 | 9.8 | 9.8 |
| STEARIC ACID | (parts by mass) | 2.0 | 2.0 | 2.0 | 2.0 | 2.0 | 2.0 | 2.0 | 2.0 | 2.0 | 2.0 | 2.0 |
| ZINC OXIDE | (parts by mass) | 3.0 | 3.0 | 3.0 | 3.0 | 3.0 | 3.0 | 3.0 | 3.0 | 3.0 | 2.9 | 2.9 |
| ANTIOXIDANT | (parts by mass) | 1.0 | 1.0 | 1.0 | 1.0 | 1.0 | 1.0 | 1.0 | 1.0 | 1.0 | 1.0 | 1.0 |
| DPG | (parts by mass) | 0.9 | 0.9 | 0.9 | 1.5 | 1.5 | 1.5 | 1.2 | 0.6 | 0.3 | 2.3 | 2.2 |
| cz | (parts by mass) | 1.7 | 1.7 | 1.7 | 1.8 | 1.8 | 1.8 | 1.7 | 1.6 | 1.6 | 2.8 | 3.2 |

(continued)

| | | PRODUCTION EXAMPLE 1 | PRODUCTION EXAMPLE 2 | PRODUCTION EXAMPLE 3 | PRODUCTION EXAMPLE 4 | PRODUCTION EXAMPLE 5 | PRODUCTION EXAMPLE 6 | PRODUCTION EXAMPLE 7 | PRODUCTION EXAMPLE 8 | PRODUCTION EXAMPLE 9 | PRODUCTION EXAMPLE 10 | PRODUCTION EXAMPLE 11 |
|---|---|---|---|---|---|---|---|---|---|---|---|---|
| DM | (parts by mass) | 0.2 | 0.2 | 0.2 | | | | 0.1 | 0.3 | 0.4 | | 0.2 |
| TET | (parts by mass) | 0.3 | 0.3 | 0.3 | | | | 0.1 | 0.4 | 0.6 | | 0.3 |
| TRA | (parts by mass) | 0.3 | 0.3 | 0.3 | | | | 0.1 | 0.4 | 0.6 | | 0.3 |
| SULFUR | (parts by mass) | 1.1 | 1.1 | 1.1 | 1.5 | 1.5 | 1.5 | 1.3 | 0.9 | 0.7 | 2.3 | 2.4 |
| MINIMUM TORQUE ML | (dN-m) | 2.7 | 2.8 | 3.0 | 2.8 | 2.9 | 3.0 | 2.8 | 3.7 | 4.2 | 3.0 | 3.2 |
| MAXIMUM TORQUE MH | (dN-m) | 11.2 | 10.6 | 11.5 | 12.1 | 12.3 | 12.4 | 13.2 | 13.4 | 14.5 | 12.0 | 13.2 |
| TENSILE BREAKING STRENGTH | (Mpa) | 24 | 21 | 21 | 19 | 18 | 17 | 20 | 29 | 34 | 23 | 25 |
| TENSILE BREAKING ELONGATION | (%) | 550 | 550 | 520 | 430 | 410 | 380 | 550 | 530 | 540 | 520 | 550 |

Comparative Example 1:

Using a plastomill equipped with a temperature controller, 40 g of the conjugated diene-based polymer (1-1), 60 g of the diene-based polymer (2-2), 55.0 g of silica particles, 4.4 g of silane coupling agent (bis(triethoxysilylpropyl)disulfide), 10 g of an extender oil (T-DAE), 2.0 g of stearic acid, 3.0 g of zinc oxide, and 1.0 g of an antioxidant (Nocrac 810-NA manufactured by Ouchi Shinko Chemical Industrial Co., Ltd.) were kneaded at 100°C for 3.5 minutes. Subsequently, the kneaded mixture was cooled to room temperature, and 1.1 g of sulfur, 1.7 g of N-cyclohexyl-2-benzothiazolylsulfenamide (CZ), 0.9 g of N,N'-diphenylguanidine (DPG), 0.2 g of dibenzothiazyl disulfide (DM), 0.3 g of tetraethylthiuram disulfide (TET), and 0.3 g of N,N'-dipentamethylenethiuram tetrasulfide (TRA) were added. The mixture was kneaded at 80°C for 1.5 minutes, to produce a rubber composition. The maximum torque MH and minimum torque ML of the obtained rubber composition are shown in the following Table 5.

The obtained rubber composition was molded, and vulcanized under a condition of 160°C by a vulcanizing press, to obtain a rubber elastic body including a crosslinked polymer. The tensile strength and tensile elongation of the obtained rubber elastic body are shown in the following Table 5.

Comparative Examples 2 to 7:

A rubber composition was produced in the same manner as that in Comparative Example 1 except that the respective components and the amounts thereof were changed in accordance with the following Table 5, so that a rubber elastic body was obtained. The ratio of each component in the obtained rubber composition, the maximum torque MH and minimum torque ML of the rubber composition, and the tensile strength and tensile elongation of the obtained rubber elastic body are shown in the following Table 5.

[Table 5]

| | | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 | COMPARATIVE EXAMPLE 7 |
|---|---|---|---|---|---|---|---|---|
| CONJUGATED DIENE-BASED POLYMER (1-1) | (parts by mass) | 40.0 | 40.0 | 20.0 | 60.0 | 80.0 | | 40.0 |
| CONJUGATED DIENE-BASED POLYMER (1-2) | (parts by mass) | | | | | | 40.0 | |
| CONJUGATED DIENE-BASED POLYMER (2-1) | (parts by mass) | | | | | | | 60.0 |
| CONJUGATED DIENE-BASED POLYMER (2-2) | (parts by mass) | 60.0 | 60.0 | 80.0 | 40.0 | 20.0 | 60.0 | |
| SILICA PARTICLES | (parts by mass) | 55.0 | 55.0 | 55.0 | 55.0 | 55.0 | 55.0 | 55.0 |
| SILANE COUPLING AGENT | (parts by mass) | 4.4 | 4.4 | 4.4 | 4.4 | 4.4 | 4.4 | 4.4 |
| EXTENDER OIL | (parts by mass) | 10.0 | 10.0 | 10.0 | 10.0 | 10.0 | 10.0 | 10.0 |
| STEARIC ACID | (parts by mass) | 2.0 | 2.0 | 2.0 | 2.0 | 2.0 | 2.0 | 2.0 |
| ZINC OXIDE | (parts by mass) | 3.0 | 3.0 | 3.0 | 3.0 | 3.0 | 3.0 | 3.0 |
| ANTIOXIDANT | (parts by mass) | 1.0 | 1.0 | 1.0 | 1.0 | 1.0 | 1.0 | 1.0 |

(continued)

| | | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 | COMPARATIVE EXAMPLE 7 |
|---|---|---|---|---|---|---|---|---|
| DPG | (parts by mass) | 0.9 | 1.5 | 1.2 | 1.5 | 0.3 | 0.9 | 0.9 |
| CZ | (parts by mass) | 1.7 | 1.8 | 1.7 | 1.8 | 1.6 | 1.7 | 1.7 |
| DM | (parts by mass) | 0.2 | | 0.1 | | 0.4 | 0.2 | 0.2 |
| TET | (parts by mass) | 0.3 | | 0.1 | | 0.6 | 0.3 | 0.3 |
| TRA | (parts by mass) | 0.3 | | 0.1 | | 0.6 | 0.3 | 0.3 |
| SULFUR | (parts by mass) | 1.1 | 1.5 | 1.3 | 1.5 | 0.7 | 1.1 | 1.1 |
| MINIMUM TORQUE ML | (dN-m) | 3.2 | 3.2 | 3.2 | 3.2 | 3.2 | 3.2 | 3.2 |
| MAXIMUM TORQUE MH | (dN-m) | 11.9 | 12.7 | 11.9 | 12.7 | 11.9 | 11.9 | 11.9 |
| TENSILE BREAKING STRENGTH | (Mpa) | 16 | 15 | 18 | 19 | 30 | 15 | 15 |
| TENSILE BREAKING ELONGATION | (%) | 350 | 350 | 350 | 390 | 520 | 340 | 340 |

As clear from the results of Tables 4 and 5, it was confirmed that a rubber elastic body having high mechanical strength could be obtained from the rubber compositions obtained in Production Examples 1 to 11 even when the mixing ratios are the same.

## Claims

1. A method for producing a rubber composition, comprising steps of:

    (A) kneading a component containing at least a highly saturated conjugated diene-based polymer and a crosslinking agent component,
    (B) kneading a component containing at least a conjugated diene-based polymer other than the highly saturated conjugated diene-based polymer, and
    (C) kneading an intermediate composition (a) obtained in the step (A) and an intermediate composition (b) obtained in the step (B).

2. The method for producing a rubber composition according to claim 1, wherein the highly saturated conjugated diene-based polymer is a polymer in which a value calculated by the following Expression (i) is not lower than 0.6, preferably not lower than 0.8, further preferably not lower than 0.9, where p, q, r, and s are composition ratios (by mole) of a structural unit represented by the following Formula (1), a structural unit represented by the following Formula (2), a structural unit represented by the following Formula (3), and a structural unit represented by the following Formula (4), respectively:

$$(p + 0.5r) / (p + q + 0.5r + s) \quad \dots \text{(i)},$$

[Chemical Formula 1]

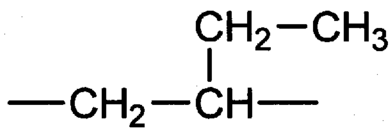

(1)

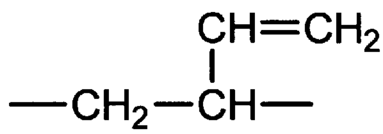

(2)

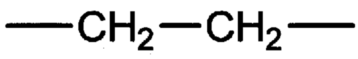

(3)

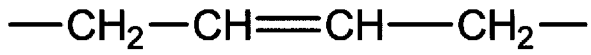

(4)

3. The method for producing a rubber composition according to claim 1 or 2, wherein an iodine value of the highly saturated conjugated diene-based polymer is 2.8 to 188 and an iodine value of the conjugated diene-based polymer other than the highly saturated conjugated diene-based polymer is 235 to 470.

4. The method for producing a rubber composition according to any one of claims 1 to 3, wherein a filler is added in the step (A) and/or the step (B).

5. A tire produced using the rubber composition obtained by the method according to any one of claims 1 to 4.

## INTERNATIONAL SEARCH REPORT

International application No. PCT/JP2017/035449

A. CLASSIFICATION OF SUBJECT MATTER
Int.Cl. C08J3/24(2006.01)i, C08L9/00(2006.01)i

According to International Patent Classification (IPC) or to both national classification and IPC

B. FIELDS SEARCHED

Minimum documentation searched (classification system followed by classification symbols)
Int.Cl. C08J3/00-3/28, C08L1/00-101/14, C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-526952 A (ZEON CHEMICALS L.P.) 20 October 2011, claim 15, paragraphs [0019], [0034], [0035], [0038], [0042], fig. 2 & US 2010/0001435 A1, claim 15, paragraphs [0022], [0058]-[0060], [0064], fig. 2 & WO 2010/002671 A1 & EP 2294133 A1 & AU 2009264950 A & CA 2729608 A & KR 10-2011-0033928 A & CN 102083907 A & MX 2010014414 A & RU 2011103477 A | 1, 4-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 November 2017 | 28 November 2017 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2017/035449

C (Continuation). DOCUMENTS CONSIDERED TO BE RELEVANT

| Category* | Citation of document, with indication, where appropriate, of the relevant passages | Relevant to claim No. |
|---|---|---|
| A | JP 57-1743 A (THE B. F. GOODRICH COMPANY) 06 January 1982, all documents (Family: none) | 1-5 |
| A | JP 56-64849 A (JAPAN SYNTHETIC RUBBER CO., LTD.) 02 June 1981, all documents (Family: none) | 1-5 |
| A | JP 2015-535548 A (COMPAGNIE GENERALE DES ETA-BLISSEMENTS MICHELIN) 14 December 2015, all documents & US 2015/0315356 A1, all documents & WO 2014/082919 A1 & EP 2925793 A1 & FR 2998574 A1 & CN 104822708 A | 2, 4-5 |
| A | JP 8-20202 A (BRIDGESTONE CORPORATION) 23 January 1996, claims, paragraph [0016] (Family: none) | 3-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014133097 A
- JP S634841 B
- JP H137970 B